(19) Europäisches Patentamt

European Patent Office

Office européen des brevets

(11) **EP 0 982 412 B1**

(12) **FASCICULE DE BREVET EUROPEEN**

(45) Date de publication et mention
de la délivrance du brevet:
**16.10.2002 Bulletin 2002/42**

(51) Int Cl.⁷: **C25B 11/12**, C25B 11/03,
H01M 4/92, H01M 4/96,
B01J 37/02, B01J 21/18

(21) Numéro de dépôt: **99401992.5**

(22) Date de dépôt: **05.08.1999**

(54) **Procédé pour améliorer l'adhérence de particules métalliques sur un substrat carboné**

Verfahren für die Verbesserung der Haftung von metallischen Partikeln auf einen Kohlenstoffsubstrat

Process for improving the adhesion of metallic particles on a carbon substrate

(84) Etats contractants désignés:
**AT BE CH CY DE DK ES FI FR GB GR IE IT LI LU
MC NL PT SE**

(30) Priorité: **21.08.1998 FR 9810633**

(43) Date de publication de la demande:
**01.03.2000 Bulletin 2000/09**

(73) Titulaire: **Atofina
92800 Puteaux (FR)**

(72) Inventeurs:
• **Andolfatto, Francoise
69006 Lyon (FR)**
• **Miachon, Sylvain
69007 Lyon (FR)**

(56) Documents cités:
**EP-A- 0 157 385        WO-A-93/18856
US-A- 3 138 560**

**Description**

La présente invention concerne un procédé pour améliorer l'adhérence de particules métalliques sur un substrat carboné.

Plus précisément, l'invention concerne un procédé pour améliorer l'adhérence de particules de métaux, tels que le platine sur un substrat carboné, lesdits métaux supportés étant utilisés , notamment, pour la fabrication des électrodes d'une cellule d'électrolyse à membrane et à cathode à réduction d'oxygène qui produit une solution d'hydroxyde alcalin et du chlore par électrolyse d'une solution aqueuse de chlorure alcalin (NaCl, KCl).

Une telle cellule d'électrolyse est généralement constituée d'une membrane échangeuse de cations qui divise la cellule en un compartiment anodique et au moins un compartiment cathodique dans lequel ladite cathode est placée, ledit compartiment étant alimenté par un gaz contenant de l'oxygène.

Les réactions anodiques et cathodiques dans de tels procédés électrolytiques utilisant une cathode à réduction d'oxygène sont :

$$\text{à l'anode} \qquad 2Cl^- \rightarrow Cl_2 + 2e^-$$

$$\text{à la cathode} \qquad H_2O + 1/2O_2 + 2e^- \rightarrow 20H^-$$

Afin d'accélérer la réaction se produisant à la cathode et d'abaisser en valeur absolue la surtension de réaction, on utilise des catalyseurs généralement des métaux nobles tels que le platine, l'argent, l'or déposés sur des supports conducteurs de courant électrique tels que notamment des matières carbonées ayant une grande surface spécifique.

De préférence, on utilise le platine ou l'argent, et, tout particulièrement le platine car, bien que ce soit un métal coûteux, c'est celui pour lequel la surtension cathodique est la plus faible en valeur absolue.

La demanderesse a constaté, lors d'essais de stabilité de catalyseurs à base de platine déposé sur charbon dans de la soude concentrée, à chaud, sous oxygène pendant plusieurs heures, une perte importante en platine.

Cette perte importante en platine entraîne une dégradation des performances électrochimiques telle qu'une augmentation de la tension de cellule.

Cette perte en platine du catalyseur utilisé dans les électrodes des cellules d'électrolyse à membrane et à cathode à réduction d'oxygène a été mentionnée par divers auteurs.

Ainsi S. Kohda et al. dans Soda to Enso, 1995, volume 46 (10) pages 402 à 419 (Absc. Number : 124-129655) rapportent qu'après une opération continue de 175 jours l'analyse des électrodes indique une perte considérable de platine. Cette perte, d'après ces auteurs, est influencée par les conditions opératoires et, en particulier par le courant électrique.

Pour limiter la perte en platine, ces auteurs proposent d'utiliser comme catalyseur du platine-irridium.

Kagaku Koggakukai dans Soda to Enso, 1996, volume 47 (1) pages 16 à 31 signale dans le cas des cathodes à air en milieu basique (solution NaOH à 9 moles/l de NaOh), à 85°C une perte de platine et une détérioration du support carboné.

On a maintenant trouvé un procédé pour améliorer l'adhérence de particules métalliques sur un substrat carboné, caractérisé en ce que, avant le dépôt desdites particules métalliques sur le substrat carboné, ledit substrat carboné est traité en milieu alcalin à une température comprise entre 50°C et 100°C et, de préférence, voisine de 90°C, sous courant d'un gaz contenant de l'oxygène pendant une durée au moins égale à 2 heures et, de préférence, supérieure à 24 heures.

Selon la présente invention, le substrat carboné est introduit dans une solution d'un hydroxyde alcalin fortement concentrée.

De préférence, on utilisera des solutions d'hydroxyde de sodium (NaOH). La concentration pondérale des solutions en hydroxyde de métal alcalin est au moins égale à 30 % et, de préférence comprise entre 30 % et 60 %.

La quantité pondérale de substrat traité peut varier dans une large mesure. Généralement on traite de 0,1 g à 10g par 100 ml de solution d'hydroxyde alcalin.

Selon la présente invention, on fait barboter le gaz contenant de l'oxygène dans la solution d'hydroxyde alcalin concentrée, chauffée à la température du traitement et contenant le substrat carboné à traiter.

Le traitement terminé, le substrat est filtré sous pression réduite puis rincé plusieurs fois avec de l'eau permutée. Il est ensuite séché à 80°C/90°C à pression atmosphérique puis ensuite sous pression réduite à environ 100°C.

Selon la présente invention, le gaz contenant de l'oxygène peut être de l'air, de l'air enrichi en oxygène ou bien encore de l'oxygène.

De préférence, on utilisera de l'oxygène.

La concentration volumique en oxygène dans le gaz est au moins égale à 20 %, et, de préférence, au moins égale à 50 %.

Les gaz enrichis en oxygène, sont, de préférence préalablement décarbonatés.

Les particules métalliques comprenant un ou plusieurs métaux peuvent être déposées sur le substrat carboné après traitement en milieu alcalin selon une méthode dite imprégnation-réduction peu différente du protocole décrit par Bartholomev et Boudard dans le Journal of Catalysis de 1972, volume 25, pages 173 à 181. Selon la présente invention, l'étape d'oxydation partielle à 600°C du substrat traité est réalisé avant le traitement en milieu alcalin. En outre, l'étape de réduction du substrat imprégné est bien effectuée à 500°C sous courant d'hydrogène, mais on applique une étape de montée en température lente.

A titre d'illustration de substrats carbonés utilisables selon la présente invention on citera le graphite référencé TIMCAL HSAG-300 ayant une surface spécifique de 360 m$^2$/g ; le SIBUNIT 5 qui est un carbone ayant une surface spécifique de 360 m$^2$/g ; le carbone VULCAN XC-72R qui est noir au four ayant une surface spécifique de 300 m$^2$/g.

Le procédé de l'invention s'applique tout particulièrement à tous les métaux dont les particules déposées sur un substrat carboné ont un diamètre moyen inférieur à 10nm.

A titre d'illustration de métaux constituant les particules métalliques déposées sur le substrat carboné traité selon le procédé de la présente invention, on citera le platine, l'argent, l'or, le ruthénium, l'iridium, ou un mélange de deux ou plus des métaux précités. L'invention concerne tout particulièrement le platine ou le mélange platine-argent.

Le test de stabilité consiste à introduire le matériau comprenant des particules métalliques déposées sur le substrat carboné ayant subi le traitement alcalin, ci-après désigné matériau, dans une solution d'un hydroxyde alcalin fortement concentrée.

De préférence, on utilisera des solutions d'hydroxyde de sodium (NaOH). La concentration pondérale des solutions en hydroxyde de métal alcalin est au moins égale à 30 % et, de préférence comprise entre 30 % et 60 %.

La quantité pondérale de matériau testée peut varier dans une large mesure. Elle varie généralement de 0,1 g à 10g par 100 ml de solution d'hydroxyde alcalin.

Selon la présente invention, on fait barboter le gaz contenant de l'oxygène dans la solution d'hydroxyde alcalin concentrée, chauffée à la température du traitement et contenant le matériau à tester.

L'essai de stabilité terminé, le matériau est filtré sous pression réduite puis rincé plusieurs fois avec de l'eau permutée. Il est ensuite séché à 80°C/90°C à pression atmosphérique puis ensuite sous pression réduite à environ 100°C.

Selon la présente invention, le gaz contenant de l'oxygène peut être de l'air, de l'air enrichi en oxygène ou bien encore de l'oxygène.

De préférence, on utilisera de l'oxygène.

La concentration volumique en oxygène dans le gaz est au moins égale à 20 %, et, de préférence, au moins égale à 50 %.

Les gaz enrichis en oxygène sont de préférence préalablement décarbonés.

Les conditions de l'essai de stabilité peuvent être différentes des conditions de traitement du substrat.

Le procédé selon la présente invention permet d'augmenter l'adhérence des particules métalliques sur le substrat carboné et donc de limiter les pertes en particules métalliques.

Un autre objet de l'invention concerne aussi les matériaux comprenant des particules métalliques déposées, de préférence, par imprégnation/réduction et un substrat carboné traité selon le procédé de la présente invention.

Ces matériaux peuvent être utilisés avantageusement pour la confection d'électrodes pour des cellules d'électrode à cathode à réduction d'oxygène.

Les exemples qui suivent illustrent l'invention.

Exemples

Substrats carbonés utilisés

- Carbone VULCAN XC-72 R.
  Il s'agit d'un noir au four, de surface spécifique égale à 300 m$^2$/g environ, dont 120 m$^2$/g microporeux et 88 m$^2$/g mésoporeux.
- Graphite TIMCAL HSAG-300
  Possède une grande surface spécifique, environ 360 m$^2$/g dont 100 m$^2$/g microporeux et 125 m$^2$/g mésoporeux.
- SIBUNIT 5
  Il s'agit d'un carbone russe intermédiaire entre les deux précédents quant au taux de graphitisation qui présente une surface spécifique égale à 360 m$^2$/g dont 34 m$^2$/g microporeux. Ce support a été utilisé après broyage mécanique afin de passer de granules de 0,2-0,5 mm à une poudre fine.

EP 0 982 412 B1

Description du procédé de traitement alcalin du substrat

Une masse de 0,5 g de substrat carboné en poudre à traiter est introduite dans un flacon en PFA de 150 ml contenant 100 ml de solution de soude à 50 % poids. Le flacon est fermé par un bouchon à travers lequel plonge un tube de PTFE (diamètre 1 mm) qui permet le bullage de l'oxygène pur dans la soude. Le débit d'oxygène pur dans la solution de soude est de 4 bulles par seconde. L'oxygène est préalablement humidifié par passage dans un flacon muni d'une plaque frittée, contenant de l'eau à 90°C. Un barreau magnétique permet de maintenir la poudre en suspension. Les flacons sont placés dans un bain d'huile permettant de stabiliser leur température à 90°C. Ce bain d'huile est placé sur un système de chauffage et d'agitation magnétique. La durée du traitement a été fixé à 100 heures ; le niveau des flacons est maintenu par ajout éventuel d'eau déminéralisée, pour compenser les pertes dues à l'évaporation.

Le traitement terminé, la poudre est filtrée sous pression réduite sur un filtre de PTFE (pores 0,5 µm), rincé trois fois par 15 ml d'eau permutée, puis mis à sécher 48 heures à 85 °C, puis passé sous pression réduite 24 h à 100°C.

Les conditions opératoires ci-dessus mentionnées sont également celles utilisées pour réaliser l'essai de stabilité sur le matériau obtenu.

Exemple 1 (conforme à l'invention)

1/ Le substrat carboné est préalablement traité selon le procédé de traitement alcalin précédemment décrit.

2/ Les particules de platine (ou de Pt + Ag) sont déposées selon le mode opératoire suivant :

On verse dans un bêcher sous agitation magnétique 154 ml d'éthanol (R.P. Normapur 99,85 %) et 40 ml de toluène (Aldrich, HPLC grade 99,9 %). Le mélangé réalisé, on ajoute le(s) sel(s) métallique(s) (6 ml de solution d'$H_2PtCl_6$ à 85,5 gPt/l par exemple pour obtenir un catalyseur à 10 % en platine). 4 g de substrat carboné traité en milieu alcalin selon 1/ (ou non traité) sont ensuite ajoutés. Cette suspension est laissé sous agitation et sous barbotage d'azote (quelques bulles par seconde) pendant quelques jours à température ambiante ce qui provoque l'évaporation des solvants. La poudre ainsi obtenue est mise à sécher 24 heures à 85°C à l'air, puis 24 heures à 100°C sous pression réduite, puis elle est pilée. A ce stade, elle est constituée d'un dépôt de sel métallique sur substrat carboné.

Lorsque l'on souhaite obtenir des particules d'argent, le sel utilisé est de l'$AgNO_3$ (Aldrich, 99,998 %). Sa dissolution est faite dans l'éthanol.

La réduction se fait par un courant d'hydrogène : la poudre est placée dans une cellule. Après montage dans le four froid, le circuit est purgé par un gaz neutre pendant 5 minutes (0,75 l/h), puis elle est alimentée par l'hydrogène (débit équivalent). La température du four suit le cycle suivant : montée à 1°C/minute jusqu'à 500°C, puis palier pendant 16 heures à 500°C.

3/ On fait subir au matériau comprenant le substrat carboné traité en milieu alcalin selon 1/ et les particules de Pt (ou de Pt/Ag) déposées sur ledit substrat selon 2/ le traitementalcalin selon 1.

Les résultats sont rassemblés ci-après dans le tableau 1.

TABLEAU 1

| Dépôt métallique sur substrat carboné traité | Diamètre moyen des particules de Pt (en nm) | Teneur en Pt avant essai de stabilité (% en poids) | Teneur en Pt après essai de stabilité (% en poids) |
|---|---|---|---|
| Platine sur Sibunit | 4 | 10 % | 9,8 % |
| Platine/argent sur Sibunit | 3,5 | 9,8 % | 9,3-9,2 % |
| Platine/argent sur Vulcan | 4,5 | 9 % | 8,6 % |

L'analyse du platine se fait sur le matériau lui-même par dissolution dans de l'eau régale puis dosage du platine contenu dans cette solution par ICP-AES (Inductive Coupled Plasma-Atomic Emission Spectroscopy).

Le diamètre moyen des particules de platine est obtenu par analyse de la raie (111) du spectre de diffraction X du matériau.

Exemple 2 (non conforme à l'invention)

Le matériau est obtenu par dépôt de particules métalliques selon 2/ décrit dans l'exemple 1 sur un substrat

4

carboné n'ayant pas subi le traitement en milieu alcalin selon 1/ décrit dans l'exemple 1.

Le test de stabilité est réalisé ensuite selon les mêmes conditions que celles décrites dans l'exemple 1 selon 3/.

Les résultats sont rassemblés ci-après, dans le tableau 2.

TABLEAU 2

| Dépôt métallique sur substrat carboné non traité | Diamètre moyen des particules de Pt (en nm) | Teneur en Pt avant essai de stabilité (en poids) | Teneur en Pt après essai de stabilité (en poids) |
|---|---|---|---|
| Platine sur Vulcan | 5 | 9,9 % | 4,5 % |
| Platine sur Graphite | 4 | 8,5 % | 2,4 % |
| Platine sur Sibunit | 4 | 8,9 % | 6,9 % |
| Platine/argent sur Sibunit | 4 | 4,2 % | 1,8 % |
| E-Tek 10 % (Pt sur Vulcan) | 3 | 8,5 % | 5,4 % |

**Revendications**

1. Procédé pour améliorer l'adhérence de particules métalliques sur un substrat carboné, **caractérisé en ce que**, avant le dépôt desdites particules métalliques sur le substrat carboné, ledit substrat carboné est traité en milieu alcalin à une température comprise entre 50°C et 100°C, sous courant d'un gaz contenant de l'oxygène pendant une durée au moins égale à 2 heures.

2. Procédé selon la revendication 1, **caractérisé en ce que** la température est voisine de 90°C.

3. Procédé selon l'une des revendications 1 ou 2, **caractérisé en ce que** le milieu alcalin est une solution concentrée d'hydroxyde d'un métal alcalin.

4. Procédé selon la revendication 3, **caractérisé en ce que** l'hydroxyde de métal alcalin est l'hydroxyde de sodium.

5. Procédé selon l'une des revendications 3 ou 4, **caractérisé en ce que** la concentration pondérale des solutions en hydroxyde de métal alcalin est au moins égale à 30 % et de préférence comprise entre 30 % et 60 %.

6. Procédé selon la revendication 1, **caractérisé en ce que** le gaz contenant de l'oxygène est de l'oxygène.

7. Procédé selon la revendication 1, **caractérisé en ce que** les particules métalliques sont du platine ou un mélange de platine et d'argent.

8. Matériau formé par un substrat carboné et des particules métalliques, ledit substrat carboné ayant été traité en milieu alcalin selon le procédé de l'une quelconque des revendications 1 à 7.

9. Matériau selon la revendication 8, **caractérisé en ce que** les particules métalliques sont déposées sur le substrat carboné par imprégnation-réduction.

10. Utilisation d'un matériau selon l'une quelconque des revendications 8 ou 9 pour la confection d'électrodes pour des cellules d'électrolyse à cathode à réduction d'oxygène.

**Patentansprüche**

1. Verfahren zur Haftverbesserung von Metallpartikeln auf einem Kohlenstoffsubstrat, **dadurch gekennzeichnet, daß** vor der Auftragung der Metallpartikel auf dem Kohlenstoffsubstrat das Kohlenstoffsubstrat in einem alkalischen Milieu bei einer Temperatur zwischen 50 °C und 100 °C unter einem sauerstoffhaltigen Gasstrom für eine Dauer von mindestens 2 Stunden behandelt wird.

**2.** Verfahren nach Anspruch 1, **dadurch gekennzeichnet, daß** die Temperatur ungefähr 90 °C ist.

**3.** Verfahren nach Anspruch 1 oder 2, **dadurch gekennzeichnet, daß** das alkalische Milieu eine konzentrierte Alkalimetallhydroxid-Lösung ist.

**4.** Verfahren nach Anspruch 3, **dadurch gekennzeichnet, daß** das Alkalimetallhydroxid Natriumhydroxid ist.

**5.** Verfahren nach Anspruch 3 oder 4, **dadurch gekennzeichnet, daß** die gewichtsbezogene Konzentration der Alkalimetallhydroxid-Lösungen mindestens 30 %, vorzugsweise zwischen 30 % und 60 %, beträgt.

**6.** Verfahren nach Anspruch 1, **dadurch gekennzeichnet, daß** das sauerstoffhaltige Gas Sauerstoff ist.

**7.** Verfahren nach Anspruch 1, **dadurch gekennzeichnet, daß** die Metallpartikel Platin oder eine Mischung aus Platin und Silber sind.

**8.** Material, gebildet aus einem Kohlenstoffsubstrat und Metallpartikeln, wobei das Kohlenstoffsubstrat in einem alkalischen Milieu gemäß dem Verfahren der Ansprüche 1 bis 7 behandelt ist.

**9.** Material nach Anspruch 8, **dadurch gekennzeichnet, daß** die Metallpartikel mittels Imprägnierung-Reduktion auf dem Kohlenstoffsubstrat aufgetragen sind.

**10.** Verwendung eines Material gemäß Anspruch 8 oder 9 zur Anfertigung von Elektroden für kathodische Elektrolysezellen zur Reduktion von Sauerstoff.

**Claims**

**1.** Process for improving the adhesion of metal particles to a carbon substrate, **characterized in that**, before the said metal particles are deposited on the carbon substrate, the said carbon substrate is treated in an alkaline medium at a temperature of between 50°C and 100°C in a stream of a gas containing oxygen for a period of at least 2 hours.

**2.** Process according to Claim 1, **characterized in that** the temperature is close to 90°C.

**3.** Process according to either of Claims 1 and 2, **characterized in that** the alkaline medium is a concentrated solution of the hydroxide of an alkali metal.

**4.** Process according to Claim 3, **characterized in that** the alkali metal hydroxide is sodium hydroxide.

**5.** Process according to either of Claims 3 and 4, **characterized in that** the concentration by weight of the alkali metal hydroxide solutions is at least 30% and preferably between 30% and 60%.

**6.** Process according to Claim 1, **characterized in that** the gas containing oxygen is oxygen.

**7.** Process according to Claim 1, **characterized in that** the metal particles are platinum or a mixture of platinum and silver.

**8.** Material formed by a carbon substrate and metal particles, the said carbon substrate having been treated in an alkaline medium according to the process of any one of Claims 1 to 7.

**9.** Material according to Claim 8, **characterized in that** the metal particles are deposited on the carbon substrate by impregnation-reduction.

**10.** Use of a material according to either of Claims 8 and 9 for making electrodes for electrolysis cells having a cathode for the reduction of oxygen.